# EUROPEAN PATENT APPLICATION

(11) **EP 4 064 399 A1**
(43) Date of publication of application: **28.09.2022**
(21) Application number: 21756901.1
(22) Date of filing: 15.02.2021
(51) Int. Cl.: H01M 10/04, H01M 50/116, B30B 3/02

(54) **SECONDARY BATTERY ROLLING APPARATUS**

(30) Priority: 20.02.2020 KR 20200021208
(71) Applicant: LG Energy Solution, Ltd., Seoul 07335 (KR)
(72) Inventor: KIM, Geon Ha, Daejeon 34122 (KR); PARK, Tae Soon, Daejeon 34122 (KR)
(74) Representative: Plasseraud IP
(86) International application number: PCT/KR2021/001902
(87) International publication number: WO 2021/167302

(57) **Abstract**

The present invention provides a rolling device for a secondary battery, which corrects an outer appearance of the secondary battery, the rolling device comprising: a jig member provided with a bottom plate and one or more correction frames which is disposed on a top surface of the bottom plate and into which the secondary battery is inserted; a pressing member provided above the jig member to press the secondary battery inserted into each of the correction frames so that the outer appearance of the secondary battery is corrected to match an outer appearance of the correction frame, wherein the pressing member comprises: a support piece configured to uniformly support an entire top surface of the secondary battery inserted into the correction frame and press the entire top surface of the secondary battery inserted into the correction frame with uniform force by transmitted force so as to correct the outer appearance of the secondary battery; and a pressing piece configured to transmit force so that the support piece presses the entire top surface of the secondary battery inserted into the correction frame with the uniform force.

## Description

### CROSS-REFERENCE TO RELATED APPLICATION

The present application claims the benefit of the priority of Korean Patent Application No. 10-2020-0021208, filed on February 20, 2020, which is hereby incorporated by reference in its entirety.

### TECHNICAL FIELD

The present invention relates to a rolling device for a secondary battery, and more particularly, to a rolling device for a secondary battery, which is capable of minimizing a thickness of the secondary battery.

### BACKGROUND ART

In general, secondary batteries refer to chargeable and dischargeable batteries, unlike primary batteries that are not chargeable. The secondary batteries are being widely used in the high-tech electronic fields such as mobile phones, notebook computers, and camcorders.

The secondary batteries are classified into a can-type secondary battery, in which an electrode assembly is embedded in a metal can, and a pouch-type secondary battery in which an electrode assembly is embedded in a pouch.

Such a pouch-type secondary battery comprises an electrode assembly, an electrode lead coupled to the electrode assembly, and a pouch accommodating the electrode assembly in a state in which a front end of the electrode lead is drawn out. Also, the electrode assembly has a structure in which electrodes and separators are alternately stacked, and the pouch comprises an accommodation part accommodating the electrode assembly and a sealing part sealing the accommodation part to be sealed.

Here, in the pouch-type secondary battery, an empty space is formed due to a gap between the electrode assembly and the accommodation part of the pouch. Thus, there is a problem in that the secondary battery increase in thickness due to the empty space between the electrode assembly and the accommodation part.

### DISCLOSURE OF THE INVENTION

### TECHNICAL PROBLEM

The present invention has been invented to solve the above problems, and an object of the present invention is to provide a rolling device for a secondary battery, which is capable of minimizing a thickness of the secondary battery by removing an empty space between an electrode assembly and an accommodation part of a pouch, and in particular, is capable of uniformly rolling an entire surface of the secondary battery to uniformly adjust the overall thickness of the secondary battery.

### TECHNICAL SOLUTION

The present invention for achieving the above object provides a rolling device for a secondary battery, which corrects an outer appearance of the secondary battery, the rolling device comprising: a jig member provided with a bottom plate and one or more correction frames which is disposed on a top surface of the bottom plate and into which the secondary battery is inserted; a pressing member provided above the jig member to press the secondary battery inserted into each of the correction frames so that the outer appearance of the secondary battery is corrected to match an outer appearance of the correction frame, wherein the pressing member comprises: a support piece configured to uniformly support an entire top surface of the secondary battery inserted into the correction frame and press the entire top surface of the secondary battery inserted into the correction frame with uniform force by transmitted force so as to correct the outer appearance of the secondary battery; and a pressing piece configured to transmit force so that the support piece presses the entire top surface of the secondary battery inserted into the correction frame with the uniform force.

The pressing piece may be provided as a pressing roller, and the pressing roller may transmit the force to the support piece while moving from one side to the other side of a top surface of the support piece.

The pressing member may further comprise a guide means configured to guide the pressing pieces so as to move from one side to the other side of a top surface of the support piece.

The guide means may comprise a guide piece having a guide hole formed from the one side to the other side of the top surface of the support piece and a guide protrusion provided on each of both ends of the guide piece and coupled to the guide hole of the guide piece to move from the one side to the other side of the top surface of the support piece along the guide hole.

The support piece may move to an upper or lower portion of the bottom plate by an elevation means.

The elevation means may be provided as an elevation rod provided on the top surface of the bottom plate and coupled so that the support piece is movable in a vertical direction.

the elevation means may comprise a hook piece provided on the elevation rod and configured to adjust a descending height of the support piece while the support piece is supported.

The hook piece may be screw-coupled to a screw thread formed on a circumferential surface of the elevation rod to ascend or descend along the elevation rod so as to adjust the descending height of the support piece.

The correction frame may be detachably coupled to the bottom plate.

The correction frame may comprise an assembly frame, and the assembly frame may be coupled to the insertion space of the correction frame, into which the secondary battery is inserted, to reduce a size of the insertion space of the correction frame by a thickness of the assembly frame.

A plurality of assembly frames having different sizes may be provided, and the plurality of assembly frames having the different sizes may be disposed in the insertion space of the correction frame to overlap each other so that each of the sizes is reduced inward.

The plurality of assembly frames may have the same thickness.

### ADVANTAGEOUS EFFECTS

The rolling device for the secondary battery according to the present invention may comprise the jig member and the pressing member. The jig member may comprise the bottom plate and the correction frame, and the pressing member may comprise the support piece and the pressing piece. Due to this feature, the empty space between the electrode assembly and the pouch of the secondary battery may be minimized to increase in thickness of the secondary battery, and in particular, the entire surface of the secondary battery may be uniformly pressed so that the overall secondary battery has the uniform thickness.

In addition, in the rolling device for the secondary battery according to the present invention, the pressing piece may be provided as the pressing roller. Due to this feature, the pressing roller may apply the uniform force to the entire surface of the support piece, and thus, the support piece may uniformly press the entire surface of the secondary battery.

In addition, in the rolling device for the secondary battery according to the present invention, the pressing member may further comprise the guide means. Due to this feature, the pressing piece may stably move from one side to the other side of the top surface of the support piece to improve the convenience and efficiency of the work.

In addition, in the rolling device for the secondary battery according to the present invention, the pressing member may further comprise an elevation means. Due to this feature, the support piece may move vertically with respect to the bottom plate to stably pressing the support piece.

In addition, in the rolling device for the secondary battery according to the present invention, the elevation means may further comprise the hook piece. Due to this feature, the descending height of the support piece may be adjusted, and thus, the secondary battery may be prevented from being excessively rolled to previously prevent the secondary battery from being deformed and damaged.

In addition, in the rolling device for the secondary battery according to the present invention, the hook piece may be screw-coupled to the elevation rod of the elevation means. Due to this feature, the hook piece may ascend or descend along the elevation rod when rotating to finely adjust the descending height of the support piece.

In addition, in the rolling device for the secondary battery according to the present invention, the correction frame may further comprise the plurality of assembly frames having the different sizes. Due to this feature, the secondary batteries having the various sizes may be rolled, resulting in improving the efficiency of use.

### BRIEF DESCRIPTION OF THE DRAWINGS

FIG. 1 is a perspective view of a secondary battery to the present invention.
FIG. 2 is an exploded perspective view of a rolling device for a secondary battery according to a first embodiment of the present invention.
FIG. 3 is a front view of the rolling device for the secondary battery according to the first embodiment of the present invention.
FIG. 4 is a cross-sectional view of FIG. 3.
FIG. 5 is a cross-sectional view illustrating a state of use of the rolling device for the secondary battery according to the first embodiment of the present invention.
FIG. 6 is a perspective view of a rolling device for a secondary battery according to a second embodiment of the present invention.
FIG. 7 is a cross-sectional view of FIG. 6.
FIG. 8 is a cross-sectional view of a rolling device for a secondary battery according to a third embodiment of the present invention.
FIG. 9 is a partial enlarged view of FIG. 8.
FIG. 10 is a perspective view of a rolling device for a secondary battery according to a fourth embodiment of the present invention.
FIG. 11 is a cross-sectional view of FIG. 10.
FIG. 12 is a cross-sectional view of a rolling device for a secondary battery according to a fifth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to the present invention]

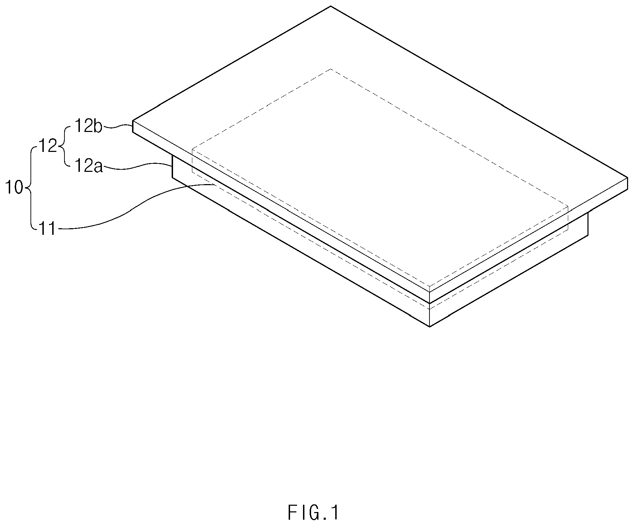

Referring to FIG. 1, a secondary battery 10 according to the present invention comprises an electrode assembly 11 and a pouch 12 accommodating the electrode assembly, and the pouch 12 comprises an accommodation part 12a accommodating the electrode assembly 11 and a sealing part 12b sealing the accommodation part 12a.

The secondary battery 10 according to the present invention has an empty space between the electrode assembly 11 and the accommodation part 12a of the pouch 12 to increase in thickness.

In order to solve the above problem, the secondary battery according to the present invention may be rolled through a rolling process to remove or minimize the empty space between the electrode assembly 11 and the accommodation part 12a of the pouch 12. Here, the rolling device for the secondary battery according to the present application is used.

That is, the rolling device for the secondary battery according to the present application may uniformly press an entire surface of the secondary battery to uniformly adjust the overall thickness of the secondary battery, thereby removing or minimizing the empty space between the electrode assembly 11 and the accommodation part 12a of the pouch 12.

Hereinafter, the rolling device for the secondary battery according to an embodiment of the present application will be described with reference to the accompanying drawings.

### [Rolling device for secondary battery according to first embodiment of the present invention]

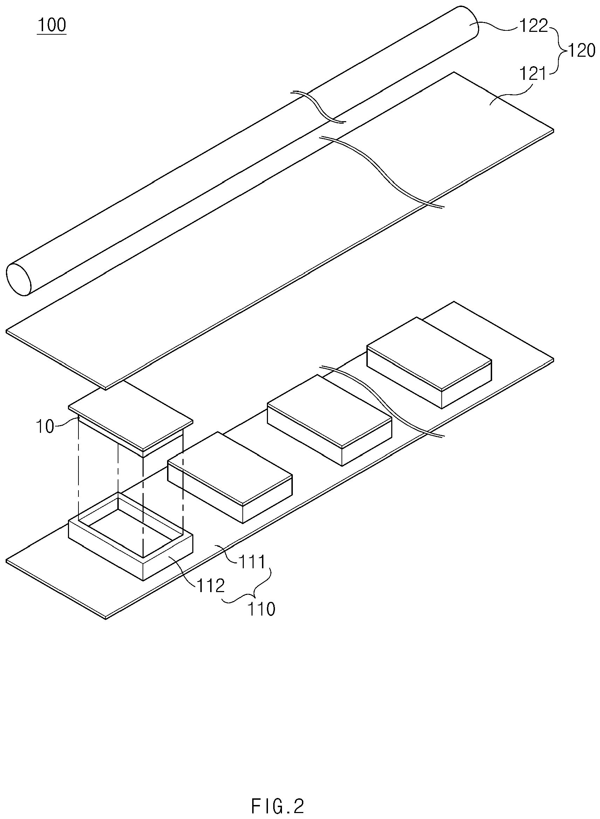

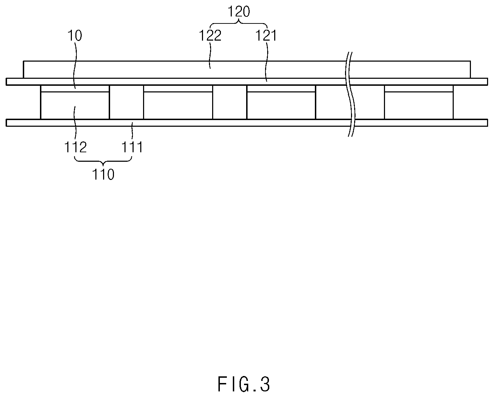

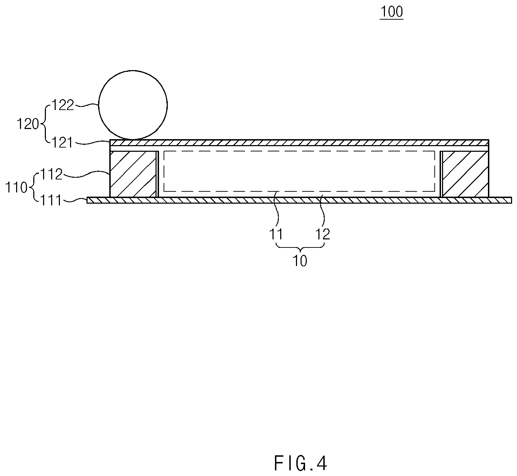

As illustrated in FIGS. 2 to 5, a rolling device 100 for a secondary battery according to a first embodiment of the present invention is configured to roll the secondary battery to correct an outer appearance of the secondary battery and comprises a jig member 110 on which the secondary battery 10 is disposed and a pressing member 120 uniformly pressing an entire top surface of the secondary battery 10 disposed on the jig member 110.

### Jig member

The jig member 110 comprises a bottom plate 111 and one or more correction frames 112 disposed on a top surface of the bottom plate 111 to correct the outer appearance of the secondary battery 10.

The bottom plate 111 has a long square plate shape, and the correction frame 112 is disposed on the top surface of the bottom plate 111.

The correction frame 112 has a rectangular frame shape, and a plurality of correction frames 112 are disposed on the top surface of the bottom plate 111 at regular intervals. That is, the accommodation part 12a of the pouch 12 is inserted into an insertion space formed in a center of the correction frame 12, and the sealing part 12b of the pouch 12 is supported on an outer circumferential surface of an upper portion of the correction frame 122.

The jig member 110 having such a structure may effectively arrange the plurality of secondary batteries 10.

### Pressing member

The pressing member 120 is configured to press the secondary battery inserted into the jig member and comprises a support piece 121 uniformly supporting an entire top surface of the secondary battery 10 inserted into the correction frame 112 and pressing the entire top surface of the secondary battery 10 inserted into the correction frame 112 with uniform force by transmitted for to correct an outer appearance of the secondary battery 10 and a pressing piece 122 transmitting the force to press the entire top surface of the secondary battery 10 inserted into the correction frame 112 with the uniform force.

The support piece 121 has the same size as the bottom plate 111, is made of a transparent or translucent material, and is placed on the top surface of the correction frame 112 to support the top surface of the secondary battery 10 inserted into the correction frame 112. Here, the support piece 121 is formed as a flat horizontal surface to uniformly support the entire top surface of the secondary battery 10. At this time, when force is transmitted to the support piece 121 from the outside, the entire support piece 121 is pressed in a direction of the correction frame 112 to press the entire top surface of the secondary battery 10 with the uniform force. Thus, the accommodation part 12a of the pouch 12 may be rolled between the support piece 121 and the bottom plate 111, and the accommodation part 12a of the pouch 12 may be in close contact with the electrode assembly 11 to remove the empty space between the accommodation part 12a and the electrode assembly 11, and simultaneously, the accommodation part 12a of the pouch 12 may be deformed into the shape of the insertion space of the correction frame 112 to uniformly correct the outer appearance of the secondary battery. Particularly, while the accommodation part 12a of the pouch 12 is pressed uniformly, the overall thickness of the secondary battery 10 may be uniformly adjusted.

The pressing piece 122 is provided as a pressing roller, and the pressing roller moves from one side to the other side of the top surface of the support piece 121 while rotating to transmit force, thereby pressing the support piece 121. Here, the pressing piece 122 may be provided to correspond to a length of the support piece 121 in a width direction to simultaneously press a close contact portion of the support piece 121, which is in close contact with the pressing piece 122, in the width direction and also transmit uniform force to the entire support piece 121 in a length direction while the pressing piece moves in this state.

As described above, the pressing piece 122 is in rolling contact with a surface of the support piece to transmit uniform force to the entire surface of the support piece.

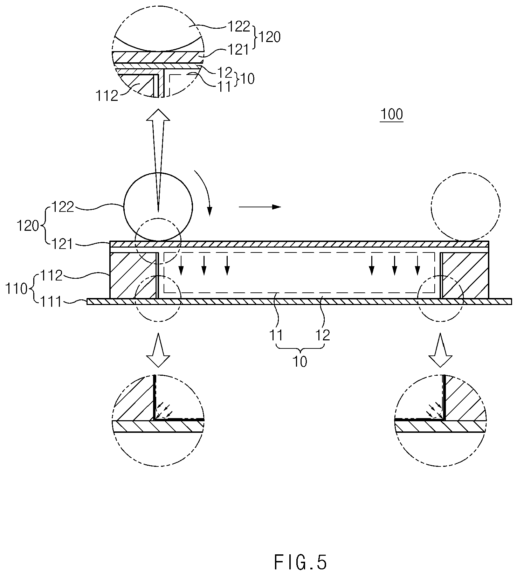

The pressing member 120 having the above-described configuration may uniformly press the entire surface of the secondary battery inserted into the correction frame 112 to uniformly adjust the overall thickness of the secondary battery 10 (see FIG. 5).

Thus, the rolling device 100 for the secondary battery according to the present invention may remove the empty space between the pouch and the electrode assembly to minimize the increase in thickness of the secondary battery, thereby uniformly rolling the entire surface of the secondary battery so that the secondary battery has the uniform thickness.

Hereinafter, a method for pressing the secondary battery according to the first embodiment of the present invention will be described.

First, a secondary battery 10 is disposed on a support member 110. That is, the secondary battery 10 is inserted into an insertion space of a correction frame 112 provided on a bottom plate 111 of the support member 110. Then, an accommodation part 12a of a pouch 12 comprised in the secondary battery 10 is inserted into the insertion space of the correction frame 112, and a sealing part 12b of the pouch 12 is disposed on a top surface of the correction frame 112.

In this state, the secondary battery 10 disposed on the support member 110 is pressed through a pressing member 120. That is, when a support piece 121 of the pressing member 120 is disposed on the top surface of the correction frame 112, the entire top surface of the secondary battery 10 is supported on a bottom surface of the support piece 121. Next, the pressing piece 122 of the pressing member 120 is disposed at one side of the top surface of the support piece 121, and then, the pressing piece 122 is pressed in a direction of the support piece 121 and simultaneously moves in a direction of the other side of the support piece 121. Then, while the pressing piece 122 moves, uniform force is transmitted to the entire surface of the support piece 121, and the support piece 121 presses the entire surface of the secondary battery 10 with uniform force through the transmitted force to roll the secondary battery 10. Here, the rolled secondary battery 10 may be deformed to be fitted with the insertion space of the correction frame 112 and simultaneously decrease in thickness. Particularly, the accommodation part of the pouch and the electrode assembly may be in close contact with each other to remove an empty space.

Hereinafter, in description of other embodiments of the present invention, the same constituent symbols are used for constituent symbols having the same function as the above-described embodiments, and duplicated descriptions will be omitted.

### [Rolling device for secondary battery according to second embodiment of the present invention]

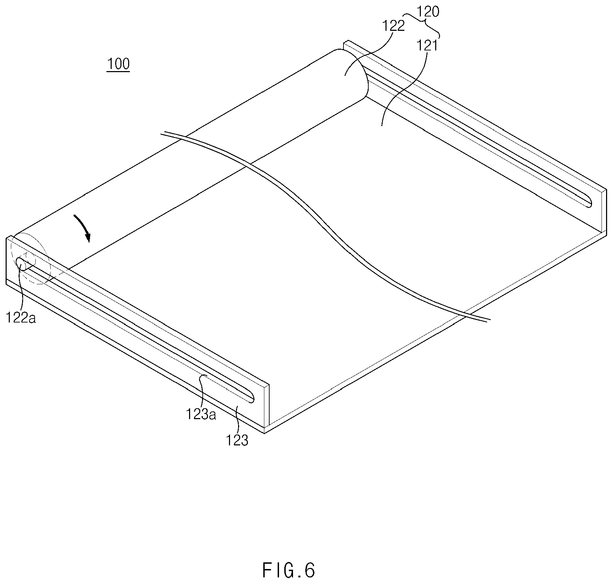

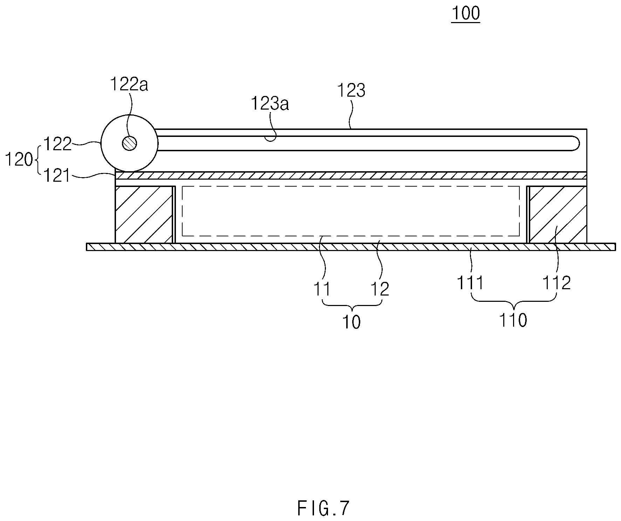

As illustrated in FIGS. 6 and 7, a rolling device 100A according to a second embodiment of the present invention comprises a pressing member 120, and the pressing member 120 comprises a support piece 121 and a pressing piece 122.

The pressing member 120 may further comprise a guide means that guides the pressing piece 122 to constantly move from one side to the other side of a top surface of the support piece 121, and the guide means may allow the pressing piece 122 to more stably move on the top surface of the support piece 121.

For example, the guide means comprises a guide piece 123 having a guide hole 123a formed from one side to the other side of the top surface of the support piece 121 and a guide protrusion 122a provided on each of both ends of the guide piece 122 and coupled to the guide hole 123a of the guide piece 123 to move from one side to the other side of the support piece 121 along the guide hole 123a.

That is, the pressing piece 122 may constantly move from one side to the other side of the top surface of the support piece 121 along the guide piece 123, and thus, the guide piece 122 may always press uniform portions of the support piece 121 with uniform force to uniformly correct the outer appearance of the secondary battery that is rolled by the rolling device for the secondary battery.

### [Rolling device for secondary battery according to third embodiment of the present invention]

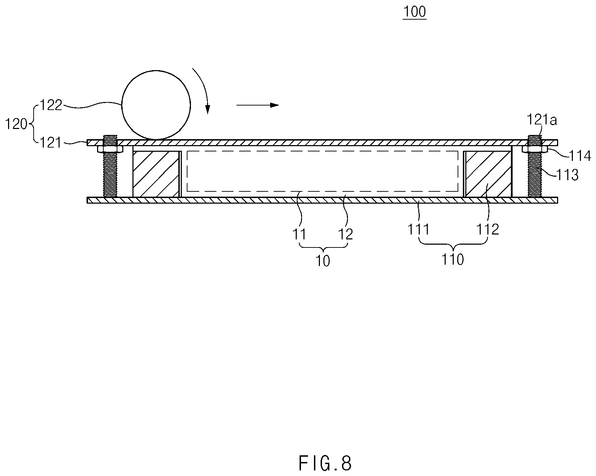

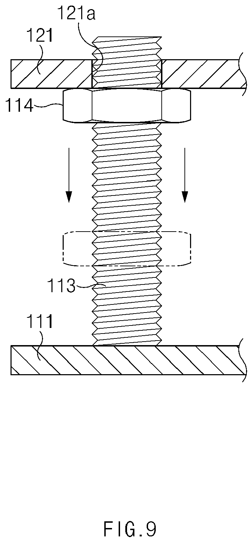

As illustrated in FIGS. 8 and 9, a rolling device for a secondary battery according to a third embodiment of the present invention comprises a pressing member 120, and the pressing member 120 comprises a support piece 121 and a pressing piece 122.

The support piece 121 vertically moves in a vertical direction with respect to a bottom plate 111 by an elevation means.

That is, the elevation means is provided as an elevation rod 113 extending upward on a top surface of the bottom plate 111. Here, when viewed in FIG. 8, the support piece 121 is coupled to the elevation rod 113 so as to be movable in the vertical direction. Thus, the elevation means may improve coupling between the support piece 121 and the bottom plate and prevent the support piece from moving in front/rear and left/right directions. Particularly, the elevation means may allow the support piece 121 to move in the vertical direction.

The elevating means comprises a hook piece 114 provided on the elevation rod 113 and adjusting a descending height of the support piece 121 while the support piece 121 is supported.

That is, when the elevation rod 113 is coupled, the support piece 121 may descend along the elevation rod 113 and then be supported on the hook piece 114. As a result, the support piece 121 may not descend any more, and thus, the descending height of the support piece 121 may be limited.

Particularly, the hook piece 114 may be screw-coupled to a screw thread formed on a circumferential surface of the elevation rod to ascend or descend along the elevation rod. Thus, a position of the hook piece 114 may be easily adjusted, and in particular, the descending height of the support piece may be more precisely adjusted.

### [Rolling device for secondary battery according to fourth embodiment of the present invention]

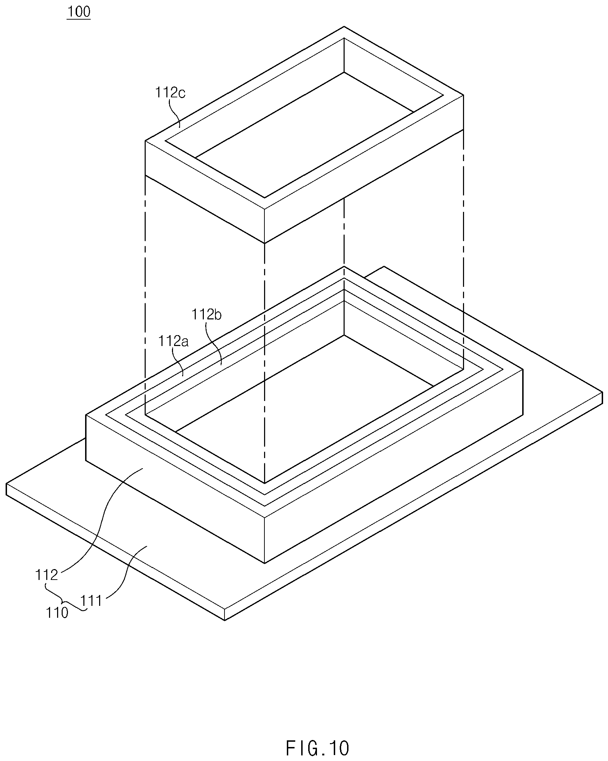

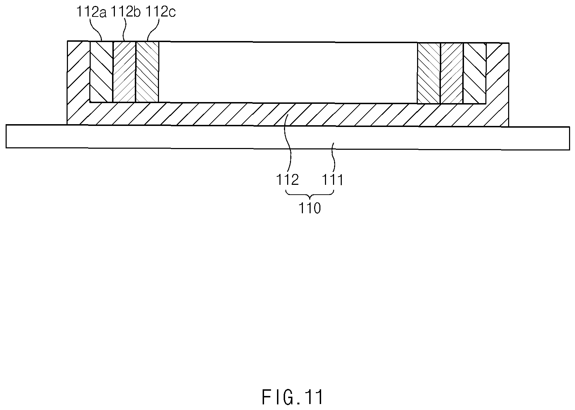

As illustrated in FIGS. 10 and 11, a rolling device for a secondary battery 100C according to a fourth embodiment of the present invention comprises a support member 110, and the support member 110 comprises a bottom plate 111 and a correction frame 112.

Here, the correction frame 112 comprises an assembly frame, and the assembly frame is coupled to an insertion space of the correction frame 112, into which the secondary battery 10 is inserted. Thus, a size of the insertion space of the correction frame 112 may be reduced by a thickness of the assembly frame. As a result, secondary batteries 10 having various sizes may be inserted into the correction frame 112.

Particularly, a plurality of assembly frames having different sizes may be provided. For example, three assembly frames 112a, 112b, and 112c having different sizes are disposed in the insertion space of the correction frame 112 to overlap each other so that each of the sizes is reduced inward. Thus, the insertion space of the correction frame 112 may be adjusted more precisely.

The assembly frames having different sizes have the same thickness, and accordingly, an inner space area of the correction frame may be effectively calculated and adjusted according to an area of an accommodation part of a pouch.

### [Rolling device for secondary battery according to fifth embodiment of the present invention]

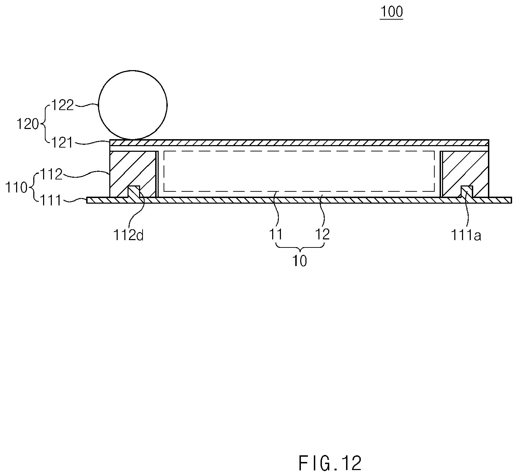

As illustrated in FIGS. 12, a rolling device for a secondary battery according to a fifth embodiment of the present invention comprises a support member 110, and the support member 110 comprises a bottom plate 111 and a correction frame 112.

Here, the correction frame 112 is detachably coupled to the bottom plate 111. That is, a coupling protrusion 111a is formed on the bottom plate 111, and a coupling groove 112d to be coupled to the coupling protrusion 111a is formed in the correction frame 112.

Thus, the correction frame may be attached to and detached from the bottom plate through the coupling protrusion 111a and the coupling groove 112d.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

100: Pressing device for secondary battery
110: Jig member
111: Bottom plate
112: Correction frame
113: Elevation rod
114: Hook piece
120: Pressing member
121: Support piece
122: Pressing piece
122a: Guide protrusion
123: Guide piece
123a: Guide hole.

## Claims

1. A rolling device for a secondary battery, which corrects an outer appearance of the secondary battery, the rolling device comprising:
a jig member provided with a bottom plate and one or more correction frames which is disposed on a top surface of the bottom plate and into which the secondary battery is inserted;
a pressing member provided above the jig member to press the secondary battery inserted into each of the correction frames so that the outer appearance of the secondary battery is corrected to match an outer appearance of the correction frame,
wherein the pressing member comprises:
a support piece configured to uniformly support an entire top surface of the secondary battery inserted into the correction frame and press the entire top surface of the secondary battery inserted into the correction frame with uniform force by transmitted force so as to correct the outer appearance of the secondary battery; and
a pressing piece configured to transmit force so that the support piece presses the entire top surface of the secondary battery inserted into the correction frame with the uniform force.

2. The rolling device of claim 1, wherein the pressing piece is provided as a pressing roller, and
the pressing roller transmits the force to the support piece while moving from one side to the other side of a top surface of the support piece.

3. The rolling device of claim 1, wherein the pressing member further comprises a guide means configured to guide the pressing pieces so as to move from one side to the other side of a top surface of the support piece.

4. The rolling device of claim 3, wherein the guide means comprises a guide piece having a guide hole formed from the one side to the other side of the top surface of the support piece and a guide protrusion provided on each of both ends of the guide piece and coupled to the guide hole of the guide piece to move from the one side to the other side of the top surface of the support piece along the guide hole.

5. The rolling device of claim 1, wherein the support piece moves to an upper or lower portion of the bottom plate by an elevation means.

6. The rolling device of claim 5, wherein the elevation means is provided as an elevation rod provided on the top surface of the bottom plate and coupled so that the support piece is movable in a vertical direction.

7. The rolling device of claim 6, wherein the elevation means comprises a hook piece provided on the elevation rod and configured to adjust a descending height of the support piece while the support piece is supported.

8. The rolling device of claim 7, wherein the hook piece is screw-coupled to a screw thread formed on a circumferential surface of the elevation rod to ascend or descend along the elevation rod so as to adjust the descending height of the support piece.

9. The rolling device of claim 1, wherein the correction frame is detachably coupled to the bottom plate.

10. The rolling device of claim 1, wherein the correction frame comprises an assembly frame, and
the assembly frame is coupled to the insertion space of the correction frame, into which the secondary battery is inserted, to reduce a size of the insertion space of the correction frame by a thickness of the assembly frame.

11. The rolling device of claim 10, wherein a plurality of assembly frames having different sizes are provided, and
the plurality of assembly frames having the different sizes are disposed in the insertion space of the correction frame to overlap each other so that each of the sizes is reduced inward.

12. The rolling device of claim 11, wherein the plurality of assembly frames have the same thickness.
